# EUROPEAN PATENT SPECIFICATION

(11) **EP 2 353 861 B1**
(45) Date of publication and mention of the grant of the patent: **03.10.2012**
(21) Application number: 11153091.1
(22) Date of filing: 02.02.2011
(51) Int. Cl.: B27D 1/04, B27D 1/06

(54) **Production method for a wooden veneered panel**
Herstellungsverfahren für ein Holzfurnier
Méthode de production d'un panneau de contreplaqué en bois

(30) Priority: 10.02.2010 IT PD20100036
(43) Date of publication of application: 10.08.2011
(73) Proprietor: Legno-Plac Elementi per Mobili S.r.l., 35010 Cadoneghe, Padova (IT)
(72) Inventor: Favaretto, Carlo, 35010, Cadoneghe, Padova (IT)
(74) Representative: Mitola, Marco

(56) References cited:
- WO-A1-2010/014005
- DE-U1- 20 018 817
- FR-A- 411 425
- FR-A- 1 315 761
- FR-A1- 2 913 631
- US-A- 2 386 821

## Description

### Field of application

The present invention relates to a production method of a veneered panel in wooden material according to the preamble of claim 1. Such a method is known from the document FR 2 913 631 A1.

The method according to the invention apply specifically to the wood industry sector producing articles for unprotected environments, such as doors and windows, or for environments with high levels of humidity.

### State of the art

Wooden articles placed in unprotected environments (typical example, external windows and doors) must be adequately protected from atmospheric agents so as to ensure their duration and functioning over time. Similar precautions must be taken for articles intended for environments where there is a high level of humidity (such as saunas or swimming-pools).

Special attention must be paid to protection from humidity, the main cause of dimensional and shape variations of the wooden material (together with the effect of solar rays) and not least of marcescence phenomena. Dimensional and shape variations may even give rise to very marked planar warping which, as well as being unsightly, may seriously jeopardise the functioning of the component.

The most commonly used protective treatments consists of painting the components with dedicated products to create a protective film on the treated surfaces.

The problem of protection from humidity is particularly felt for veneer type panels.

The veneer technique involves coating untreated panels with sheets or thin layers of wooden material, the so-called veneer, generally having a thickness of not more than 5mm. The veneer sheets, attached to the component by gluing, are basically used to improve the appearance of the component by means of special processing techniques. Secondarily, the veneer sheets act as a protective barrier for the material underneath. In some cases, such as chipboard panels, the veneer sheets help to improve the mechanical properties of the component, making it more rigid and resistant to scratching and impact.

Generally, veneer panels too are protected from water and humidity by painting treatments.

A first limitation of traditional veneered panels lies in the fact that, if the veneer is damaged, for example as a result of atmospheric agents or following knocks or abrasion, the external protective film is in turn damaged and humidity can penetrate inside without encountering any further barriers, damaging the underlying wooden material.

A second limitation, typically occurring on veneered panels having a multi-layer, laminwood, lamellar or multi-material core, and closely connected with the effects of humidity, is the poor resistance to "telegraphing".

"Telegraphing" consists of the transmission of the underlying structure to the surface, that is of the glue lines of the elements forming the core. The phenomenon is caused by an uneven swelling of the elements in thickness (due to different humidity absorption) or to differential dilation generated by the stresses of the wooden material used. This appears clearly evident when the surface of the panel is veneered and/or is finished with a very shiny paint, a condition in which the human eye perceives surface distortions to the order of few thousandths of an inch.

The poor resistance of veneered panels to "telegraphing" is essentially due to the fact that the veneer sheets are rigidly connected to the underlying core and therefore reflect all the stress and deformation.

The problem of telegraphing in veneered panels has been resolved by adopting a special layered structure. A layer of corrugated cardboard is paced between the core and the outer coating to absorb the strain deriving from unevenness of the core. This expedient is certainly efficient but as well as being rather tiresome to perform, is not suitable for panels intended for external use or in any case for use in unprotected environments. Damage of the outer layer of coating would inevitably expose the layer of cardboard to humidity, with negative effects on the component.

### Presentation of the invention

A further purpose of the present invention is to make available a method of producing a veneered panel in wooden material offering improved resistance to humidity and water.

A further purpose of the present invention is to make available a method of producing a veneered panel in wooden material which is substantially free of telegraphing and at the same time simple and economical to produce.

A further purpose of the present invention is to make available a method of producing a veneered panel in wooden material according to the invention.

### Brief description of the drawings

The technical characteristics of the invention according to the aforementioned purposes are clear to see from the contents of the claims below and the advantages of the same will prove more clearly comprehensible in the detailed description which follows made with reference to the appended drawings, showing one or more non-limiting embodiments purely by way of example, wherein:

- Figures 1 and 2 show a perspective view and a side view, both exploded, of a panel according to a general embodiment of the invention;

- Figure 3 shows a side view of a panel assembled according to a preferred embodiment of the invention;

- Figure 4 shows an enlarged view of the part of the panel in Figure 3 marked in the circle shown therein and relative to the structure of the veneer, wherein the proportions betwen the parts have not been respected on account of the graphic exposition;

- Figure 5 shows a flow diagram of the method of producing the panel according to the invention, according to a preferred embodiment. Detailed description

With reference to the appended drawings reference numeral 1 globally denotes a veneered panel in wooden material produced according to the method of the invention.

The description made with reference to the panel 1 is understood to refer to the production method of a veneered wooden panel which the present invention relates to.

According to a general embodiment of the invention, the panel 1 comprises a load-bearing core 2 having at least one main side 2' covered by a veneer wooden layer 3.

The load-bearing core in wooden material may be of any type, such as a multilayer panel in solid wood, a laminwood panel, a chipboard panel, an MDF (Medium density fibreboard) or OSB (Oriented strand board) panel.

The load-bearing core 2 may be covered on both main sides or on one side only. Hereafter in the description reference will be made only to the case of covering a single side, without, by such, wishing to limit the scope of protection of the invention to this specific case.

According to the invention, at least one inner wooden layer 4 is interposed between the core 2 and the outer layer of veneer 3, and is connected to the outer layer 3 and the core 2 by gluing with waterproofing type glue.

Under the veneer layer 3 there is therefore a barrier formed of two layers of waterproofing glue between which a wooden layer is interposed. This barrier gives the veneered panel 1 a greater resistance to the penetration of humidity than traditional veneered wooden panels.

The efficacy and duration over time of the waterproofing barrier derives from the presence of the inner wooden layer 4, which as well as acting as reinforcement/support for the glue protects the innermost waterproofing layer i.e.(the layer in direct contact with the load-bearing core) from the effect of atmospheric agents (especially solar rays) in the case in which the veneer layer 3 should be damaged.

Advantageously, the waterproofing glue forms a first film 5' interposed between the core 2 and the inner layer 4 and a second film 5" interposed between the inner layer 4 and the veneer layer 3. Preferably, the two films have an average thickness to the order of 0.05 mm (considering the thickness in the finished product).

Preferably the waterproofing type glue comprises melamine. In particular mixtures of several types of glue may be used, such as a mixture of ureic glues and melamine. The use of melamine in the glues makes it possible to significantly reduce the absorption of environmental humidity (contrasting effect to the hydrolysis of the glue), thereby reducing dimensional deformation phenomena and the development of bacteria and/or fungi in the wood which would give rise to marcescence. Preferably the melamine content of the glue is no less than 12-15% in weight.

Polyurethane glues may be used as an alternative to glues with melamine, inasmuch as able to give waterproofing characteristics.

Other glues which may be used as alternatives to glues with melamine, although not preferred, are glues for outdoors, such as vinyl-based adhesives satisfying standards EN 204 class D4 and Watt 91.

According to the present invention, the inner wooden layer 4 is completely impregnated with the waterproofing glue.

By impregnating the inner wooden layer 4 in depth the waterproofing glue forms a water-repellent network inside the fibrous structure of the wooden layer. The glue penetrates the fibrous structure, positioning itself in the interstices between the fibres. The glue thereby has a covering effect. This way the water-repellent (inter-fibrous) network substantially blocks the transmission of humidity from one fibre to the next.

The waterproofing effect has positive effects not only in preventing the penetration of humidity (in the case in which the panel is located in a moist environment), but also prevents the loss of humidity by the load-bearing core. This has positive effects in limiting shrinkage and contraction phenomena of the wood due to exposure to solar rays or permanency in hot, dry environments.

The aforesaid waterproofing barrier makes it possible to separate from each other the two main sides of the panel, normally exposed to different micro-climates (consider the differences in temperature between the inside and outside of a door). This separation reduces the humidity exchange between the parts of the panel and consequently also the warping deriving from variations in humidity.

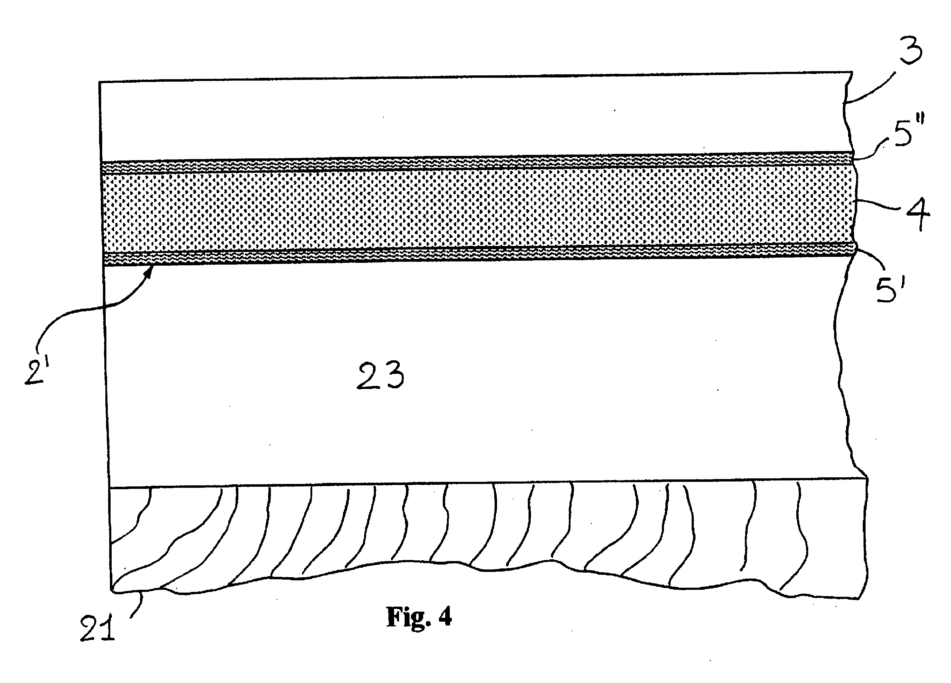

In Figure 4 the inner layer 4 impregnated with glue has been graphically highlighted so as to differentiate it from the veneered layer 3 and the underlying load-bearing core.

Thanks to the complete impregnation of the inner wooden layer 4 (i.e. throughout its thickness), the water-repellent network inside the fibrous structure can attach itself to two layers or films of glue 5' and 5" in contact with the two main sides. Such connection occurs substantially throughout the surface of such sides.

Thanks to a complete impregnation (achieved using the method according to the invention which will be described in more detail later) the inner wooden layer 4 becomes one with the glue. In other words the inner wooden layer 4 is closely incorporated in the glue. Thus incorporated, the inner wooden layer 4 performs a mechanical function of support and reinforcement of the waterproofing barrier, the overall thickness of which is given by the sum of the two films 5' and 5" and of the wooden layer 4.

Preferably the veneer layer 3 is not completely impregnated with glue unlike the inner layer 4. The presence of the waterproofing glue on the outer surface of the veneer would prevent subsequent specific painting treatments, such as with water-based paint.

The inner wooden layer 4 and the veneer layer 3 can be made using any wood suitable for the purpose. In particular the inner layer 4 may be in toulipier; the veneer layer 3 may be in luxury wood such as for example toulipier, larch, pine, walnut, oak, cherry or exotic woods (such as rosewood or ebony).

Preferably the inner wood layer 4 is not more than 2mm thick. However, thicker layers may be used, for example even up to 5mm.

Even more preferably the inner wood layer 4 is not more than 0.8mm thick. This choice facilitates and simplifies the impregnation of the wooden layer as well as reducing problems related to balancing the stresses and dilations transmitted by the inner wooden layer 4 to the rest of the panel 1.

Preferably the two wooden layers 3 and 4 are substantially the same thickness. This is particularly advantageous when wooden layers more than 0.8mm thick are used. In this case it proves preferable moreover to position the two wooden layers with their fibres crossing each other, so to achieve efficacious balancing of the stresses deriving from warping of the two wooden layers.

In the case in which wooden layers more than 0.8 mm thick are used, the inner wooden layer 4 and the veneer layer 3 may even not be the same thickness, though it proves preferable to use layers of the same thickness (for example for reasons of simplifying production).

In particular with wooden layers not more than 0.8mm thick, it's possible to position the two layers 3 and 4 without crossing over the fibres. With these thicknesses the stresses of the wooden layers begin to fall considerably. To this it should be added that the interposition of a film of glue between the two layers and the impregnation of the inner layer 4 helps to "mechanically" insulate the two wooden layers, reducing the problem further. In other words, with thicknesses below 0.8mm, the problem of balancing stresses can be overlooked. As will be clarified later in the description, in some cases this may lead to significant advantages as regards flexibility of production.

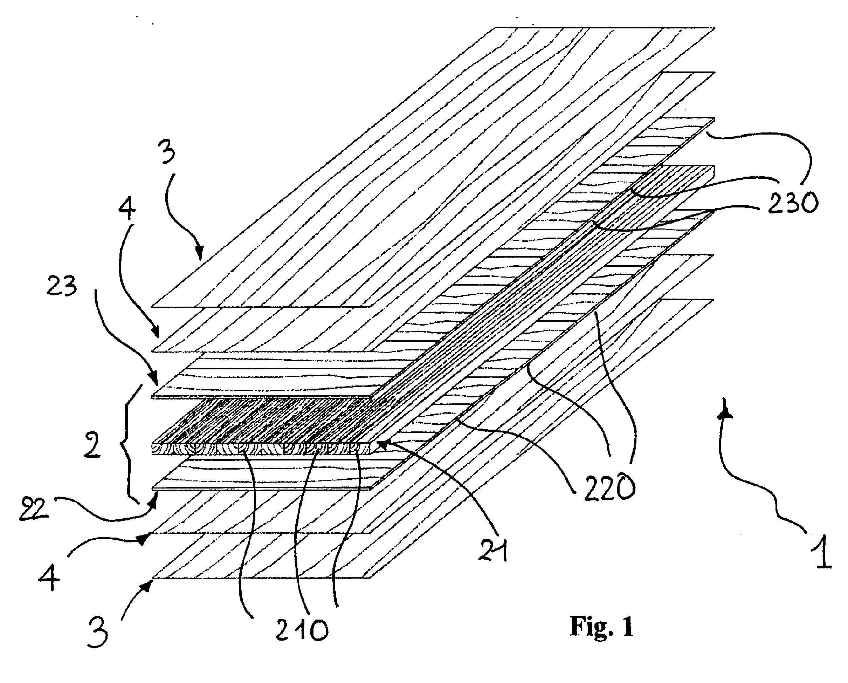

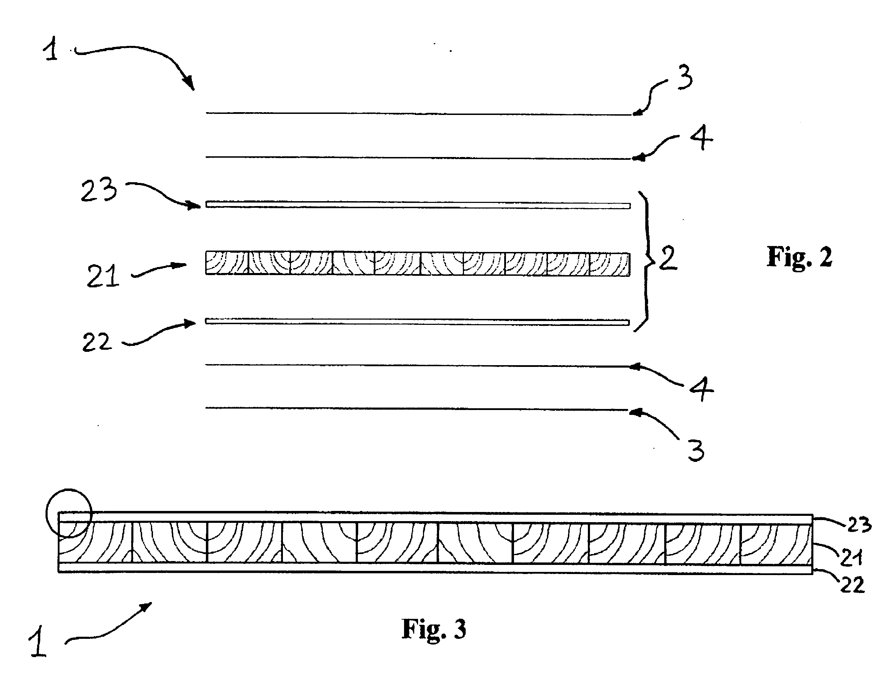

According to a particularly preferred embodiment of the invention, illustrated in particular in Figures 1 and 2, the load-bearing core 2 is a multilayer panel in solid wood, comprising two or more load-bearing layers laid over each other 21, 22 and 23.

More in detail, the aforesaid load-bearing layers 21, 22 and 23 are reciprocally positioned with a crossed fibre arrangement. The crossing over of the fibres creates a balance of the stresses, calculated on the basis of the thicknesses used and of other important factors such as the choice of wood and the type of cut of the trunk and of the planks. Balancing of the stresses helps to overcome the problem of stresses and warping caused by atmospheric agents and ageing of the wood itself.

The load-bearing layers 21, 22 and 23 are connected to each other by gluing. To such purpose, to further improve the resistance of the panel 1 to humidity, the same waterproofing glue (for example comprising melamine or a polyurethane glue) used to glue the inner wooden layer 4 and the veneer layer 4 to the load-bearing core 2 may be used. Alternatively, a glue without special waterproofing properties, for example ureic or vinyl-based glue without melamine, may be used.

Preferably the load-bearing layers 21, 22 and 23 are composed of strips of solid wood 210, 220 and 230 laid alongside each other, as illustrated in particular in Figure 1. The division of the single layer into single elements significantly reduces overall warping of the layer itself.

The strips 210, 220 or 230 of a single load-bearing layer are connected to each other by gluing or may be simply laid alongside each other (left loose or wedged together). In the latter case however a series of construction complications arise which lie beyond the scope of the present invention.

The load-bearing layers 21, 22 and 23 may be of the same thickness (for example if only two load-bearing layers are envisaged) or may be different thicknesses (for example in the case in which three load-bearing layers are envisaged, as shown in Figure 1). The choice of thicknesses is in any case made with a view to balancing the stresses inside the core 2.

One example of a solid wood multilayer panel utilisable as a load-bearing core 2 comprises three load-bearing layers 21, 22 and 23 laid over each other, each in single-layer solid wood. The central layer 21 has a thickness varying from 8 mm to about 60mm, with a longitudinal grain, and is formed of strips 210 glued to each other at the sides, having a width of 20 to 150mm. The longitudinal direction corresponds to the main extension of the final panel.

The other two layers 22 and 23 glued to the two main sides of the central layer 21, are composed of two panels in single-layer solid wood 6mm to 12mm thick with a transversal grain, each formed of strips 220 or 230, 20 to 150 mm wide, glued to each other at the sides.

According to a particularly preferred embodiment, (shown in Figure 1), the inner layer 4 is positioned with the fibres lying crossways to the underlying load-bearing layer. This particular choice of arrangement of the fibres of the inner layer 4 in relation to the inner core is important in the case in which the core is subject to localised warping or dilation. The crossed over arrangement makes it possible to balance the residual stress, thereby preventing damage or tearing of the inner wooden layer 4, tears which would inevitably affect the continuity of the waterproofing layer.

This problem arises, for example, when the load-bearing core is made with a multilayer panel in solid wood, while practically it does not arise when the load bearing core is composed of a chipboard or MDF panel, given that such are materials already intrinsically balanced as regards stresses.

As already mentioned above, using wooden layers 3 and 4 not more than 0.8mm thick, it's possible to position the two layers 3 and 4 without crossing over the fibres. In the case in which the load-bearing core is a three-layer panel in solid wood with the two outermost load-bearing layers of the core having a transversal grain, for reasons of tensile balancing already mentioned, the inner wooden layer 4 is positioned with the grain positioned longitudinally. In this case (again assuming a thickness of the two covering layers 3 and 4 of less than 0.8mm) the veneer layer 3 may be laid over the inner wooden layer 4 in any direction of the grain. In particular, the veneer layer 3 may be in the same direction of the grain i.e. longitudinal. This constitutes an advantage given that for commercial reasons veneer panels with a veneer layer having a longitudinal grain are preferred.

A series of samples taken from a veneer panel made according to the preferred embodiment with the inner wooden layer completely impregnated with glue were subjected to quality and resistance tests. More in detail, the panel was composed of a three-layer load-bearing core in fir (central layer 26mm thick, longitudinal grain; two outer layers 6mm thick, transversal grain) covered on both main sides by two veneer sheets in toulipier with longitudinal grain, 0.6mm thick. Ureic-based glue with melamine (20% in weight) was used to glue all the components, including those forming the load-bearing core. The inner veneer sheet was completely impregnated with glue.

The samples passed the following tests:
- gluing quality SWP/3 test complying with CEN/TS 13354/03 standard, resulting to be classifiable as suitable in class 3;

- PTP25:1995 test of minimal warping (1mm less in moist phase, 0.5mm less in dry phase) complying with standard UNI 10477/95.

In particular the samples proved free of telegraphing. In fact no defects visible to the naked eye were observed.

A further purpose of the present invention is to make available a method of producing a veneered panel in wooden material.

In a general embodiment of the invention, the method comprises the following operative steps:
a) preparing a load-bearing core 2, at least one outer veneer sheet 3 and at least one inner veneer sheet 4;

b) applying waterproofing type glue to the core 2 and to at least one of the two veneer sheets 3 and 4;

c) placing the inner veneer sheet 4 and the outer veneer sheet 3 on the load-bearing core 2 on at least one main side to be veneered, obtaining an assembly;

d) pressing the aforesaid assembly to obtain the panel 1.

Preferably the waterproofing type glue comprises melamine. In particular mixtures of several types of glue may be used, such as a mixture of ureic glues and melamine.

Alternatively polyurethane glue may be used as the waterproofing glue.

Step b) of applying the glue comprises a sub-step b1) of impregnating the inner veneer sheet 4 with the glue.

As already mentioned above when describing the veneer panel 1 according to the invention it is advantageous for the inner wooden veneer sheet or layer 4 to be impregnated throughout its thickness with the waterproofing glue.

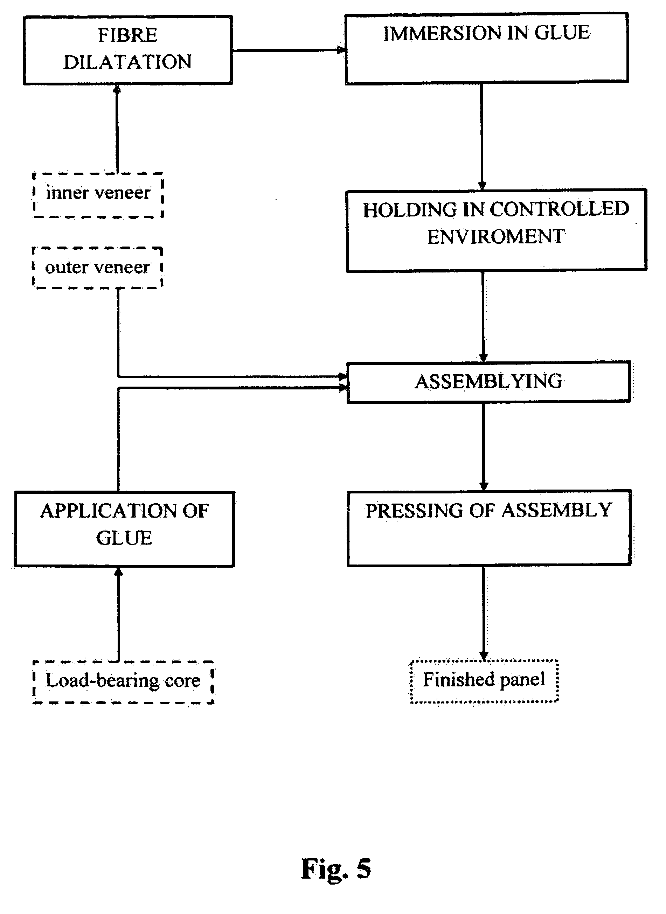

As illustrated in Figure 5, sub-step b1) of impregnation envisages immersing the inner veneer sheet 4 in the glue. The glue is at such a temperature as to prevent it from setting, i.e.at such a temperature as to prevent the catalytic reactions leading to hardening of the glue. For example, in the case of glues comprising melamine the temperature is 2 to 8°C.

Advantageously, step b1) of impregnation envisages dilation of the fibres of the inner veneer sheet 4, to be performed prior to immersion in the glue. The dilation of the fibres enables the glue, and in particular the melamine, to penetrate inside the wooden layer in depth. Without dilation of the fibres, the penetration process would be longer and difficult. The glue would in fact tend to preferentially penetrate along the growth channels of the wood, the latter being structures naturally more porous.

According to the invention dilatation is obtained by nebulising water or an aqueous solution on the inner veneer sheet 4. Preferably nebulisation is performed hot and under pressure. The water or aqueous solution may contain melamine.

As the finely nebulised water falls on the surface of the veneer sheet it dilates the surface fibres naturally more shrunk than the inner fibres inasmuch as more subject to drying phenomena. This dilation thereby paves the way for the subsequent penetration of the glue. The water is applied by nebulisation so as to reduce the quantity needed and thereby prevent it from penetrating inside the material and impregnating it.

Advantageously, sub-step b1) of impregnation envisages -after immersion in the glue- holding the inner veneer sheet 4 in a controlled environment, for a preset time depending on the thickness of the veneer sheet, so as to enable the glue to penetrate in-depth throughout the thickness of the veneer sheet 4. For example, with a veneer sheet in toulipier, 0.6 mm thick, the holding time is 1 to 5 minutes.

Holding is in a controlled environment at such a temperature as to prevent the glue from setting. Thereby maintaining the elasticity of the veneer sheet (which will then be joined to the inner core and pressed) and preventing the glue from hardening to allow it to penetrate inside the fibrous structure.

Preferably, step b) of applying the glue further envisages a specific sub-step b2) of applying a layer of glue to at least one side to be veneered of said load-bearing core 2. Thanks to this operating expedient a sufficient quantity of glue can be applied to the inner core to cover any surface irregularities which might otherwise interrupt the continuity of the waterproofing barrier.

With reference to the flow diagram in Figure 5, the sequence of steps of the method according to the invention will now be illustrated. The inner veneer sheet 4 is subjected to dilatation of the fibres by nebulising water or an aqueous solution. The immersion of the inner veneer sheet 4 in the glue follows, the latter being performed at a temperature such as to prevent hardening. A step of holding the treated veneer sheet in a controlled environment for a predefined period follows. The veneer sheet is then joined to the load-bearing core 2 on the side to be covered, to which a layer of glue has previously been applied. The outer veneer sheet 3 is then placed on top of the inner veneer sheet 4. No glue needs to be applied to the outer veneer sheet 3 beforehand since the glue present on the surface of the inner veneer sheet is already sufficient for gluing. An assembly is thus obtained which is then subjected to pressing. Pressing is preferably performed hot, at a temperature of 90 to 120°C and at a pressure of 1 to 4 kg/cm². The panel thus obtained may lastly be subjected to surface finishing treatments, such as painting.

Advantageously, the method according to the invention may be applied to make a veneered panel in wooden material as described above, adopting entirely or in part, separately or jointly, all the characteristics described, in particular in relation to the thicknesses of the inner layer, the veneer layer, the load-bearing core, as well as in relation to the expedients of crossing over the fibres of the various layers of the panel with each other or with the load-bearing core.

The invention thus permits numerous advantages in part already described.

The panel 1 according to the invention, in particular made according to the method of the present invention, offers increased resistance to humidity compared to traditional veneered wooden panels.

The veneered panel according to the invention, in particular in the preferred embodiment with inner wooden layer impregnated with glue, and in particular made according to the method of the present invention, may be used in unprotected outdoor environments maintaining its characteristics substantially unaltered.

The panel further presents an accentuated resistance to differences in temperature.

In particular the panel may be used in unprotected environments without presenting nonconformity caused by ungluing, dimensional variations, planar warping.

The panel 1 according to the invention, in particular in the preferred embodiment with inner wooden layer impregnated with glue, also proves substantially exempt of unsightly surface undulations (telegraphing effect).

The invention so conceived thereby achieves the predefined objectives.

## Claims

1. Method for the production of a veneer panel in wooden material, comprising the following operating steps:
a) preparing a load-bearing core (2), at least one outer veneer sheet (3) and at least one inner veneer sheet (4);
b) applying waterproofing type glue to said core (2) and to at least one of said two veneer sheets (3,4);
c) placing said inner veneer sheet (4) and said outer veneer sheet (3) on said load-bearing core (2) on at least one main side to be veneered, obtaining an assembly;
d) pressing said assembly to obtain said panel (1),
said step b) of applying the glue envisaging a sub-step b1) of impregnating said inner veneer sheet (4) with said glue, said sub-step b1) of impregnation envisaging the immersion of said inner veneer sheet (4) in said glue, **characterised in that** said step b1) of impregnation envisages dilatation of the fibres of said inner veneer sheet (4) prior to said immersion, said dilatation being obtained by nebulising water or an aqueous solution on said inner veneer sheet (4).

2. Method according to claim 1, wherein said glue is a polyurethane glue or a glue comprising melamine.

3. Method according to claim 2, wherein during said sub-step of impregnation b1) said glue is at such a temperature as to prevent it from setting.

4. Method according to one or more of the claims from 1 to 3, wherein after immersion in the glue said sub-step b1) of impregnation envisages holding said inner veneer sheet (4) in a controlled environment, for a preset time depending on the thickness of said inner veneer sheet (4), so as to achieve in-depth impregnation of said inner veneer sheet (4).

5. Method according to claim 4, wherein said holding is in a controlled environment at such a temperature as to prevent said glue from setting so as to maintain the elasticity of said veneer sheet and allow said glue to penetrate inside the fibrous structure.

6. Method according to one or more of the claims from 1 to 5, wherein said step b) of applying the glue envisages the sub-step b2) of applying a layer of glue to said at least one side to be veneered of said load-bearing core (2).

## Patentansprüche

1. Verfahren zur Herstellung einer Furnierplatte aus einem Holzwerkstoff, umfassend die folgenden Arbeitsschritte:
a) Vorbereiten eines tragenden Kerns (2), mindestens eines äußeren Furnierblatts (3) und mindestens eines inneren Furnierblatts (4);
b) Aufbringen eines wasserfest machenden Klebstoffs auf den Kern (2) und auf mindestens eines der beiden Furnierblätter (3,4);
c) Platzieren des inneren Furnierblatts (4) und des äußeren Furnierblatts (3) auf den tragenden Kern (2) auf mindestens eine Hauptseite, die furniert werden soll, wodurch eine Anordnung erhalten wird;
d) Pressen der Anordnung, um die Platte (1) zu erhalten, wobei der Schritt b) des Aufbringens des Klebstoffs einen Unterschritt b1) des Imprägnierens des inneren Furnierblatts (4) mit dem Klebstoff vorsieht, wobei der Unterschritt b1) des Imprägnierens das Eintauchen des inneren Furnierblatts (4) in den Klebstoff vorsieht,
**dadurch gekennzeichnet, dass** der Schritt b1) des Imprägnierens die Dilatation der Fasern des inneren Furnierblatts (4) vor dem Eintauchen vorsieht, wobei die Dilatation durch Zerstäuben von Wasser oder einer wässrigen Lösung auf dem inneren Furnierblatt (4) erreicht wird.

2. Verfahren gemäß Anspruch 1, wobei der Klebstoff ein Polyurethan-Klebstoff oder ein Melamin umfassender Klebstoff ist.

3. Verfahren gemäß Anspruch 2, wobei während dem Unterschritt des Imprägnierens b1) der Klebstoff eine Temperatur aufweist, die verhindert, dass er abbindet.

4. Verfahren gemäß einem oder mehreren der Ansprüche 1 bis 3, wobei nach dem Eintauchen in den Klebstoff der Unterschritt b1) des Imprägnierens das Halten des inneren Furnierblatts (4) in einer kontrollierten Umgebung für eine vorgegebene Zeit, die von der Dicke des inneren Furnierblatts (4) abhängt, vorsieht, um eine gründliche Imprägnierung des inneren Furnierblatts (4) zu erreichen.

5. Verfahren gemäß Anspruch 4, wobei das Halten in einer kontrollierten Umgebung bei einer Temperatur erfolgt, die verhindert, dass der Klebstoff abbindet, damit die Elastizität des Furnierblatts erhalten bleibt und damit der Klebstoff in das Innere der Faserstruktur eindringen kann.

6. Verfahren gemäß einem oder mehreren der Ansprüche 1 bis 5, wobei der Schritt b) des Aufbringens des Klebstoffs den Unterschritt b2) des Aufbringens einer Klebstoffschicht auf die mindestens eine Seite des tragenden Kerns (2), die furniert werden soll, vorsieht.

## Revendications

1. Procédé pour la production d'un panneau de plaquage en un matériau ligneux, comprenant les étapes de fonctionnement suivantes :
a) préparer un noyau support de charge (2), au moins une feuille de plaquage extérieure (3) et au moins une feuille de plaquage intérieure (4) ;
b) appliquer une colle de type étanche à l'eau audit noyau (2) et à au moins l'une desdites deux feuilles de placage (3, 4) ;
c) placer ladite feuille de placage intérieure (4) et ladite feuille de placage extérieure (3) sur ledit noyau support de charge (2) sur au moins un côté principal à plaquer, obtenant un ensemble ;
d) presser ledit ensemble pour obtenir ledit panneau (1), ladite étape b) d'application de la colle prévoyant une étape secondaire b1) d'imprégnation de ladite feuille de placage intérieure (4) avec ladite colle, ladite étape secondaire b1) d'imprégnation prévoyant l'immersion de ladite feuille de placage intérieure (4) dans ladite colle, **caractérisé en ce que** ladite étape b1) d'imprégnation prévoit la dilatation des fibres de ladite feuille de placage intérieure (4) avant ladite immersion, ladite dilatation étant obtenue par nébulisation d'eau ou d'une solution aqueuse sur ladite feuille de placage intérieure (4).

2. Procédé selon la revendication 1, dans lequel ladite colle est une colle de polyuréthane ou une colle comprenant de la mélamine.

3. Procédé selon la revendication 2, dans lequel, pendant ladite étape secondaire d'imprégnation b1), ladite colle est à une température telle qu'elle l'empêche de durcir.

4. Procédé selon une ou plusieurs des revendications 1 à 3, dans lequel, après une immersion dans la colle, ladite étape secondaire b1) d'imprégnation prévoit de maintenir ladite feuille de placage intérieure (4) dans un environnement contrôlé, pendant un temps présélectionné en fonction de l'épaisseur de ladite feuille de placage intérieure (4), de manière à réaliser une imprégnation en profondeur de ladite feuille de placage intérieure (4).

5. Procédé selon la revendication 4, dans lequel ledit maintien s'effectue dans un environnement contrôlé à une température qui empêche ladite colle de durcir de manière à maintenir l'élasticité de ladite feuille de placage et de permettre à ladite colle de pénétrer à l'intérieur de la structure fibreuse.

6. Procédé selon une ou plusieurs des revendications 1 à 5, dans lequel ladite étape b) d'application de la colle prévoit l'étape secondaire b2) d'application d'une couche de colle audit au moins un côté à plaquer dudit noyau support de charge (2).
